# EUROPÄISCHE PATENTANMELDUNG

(11) **EP 3 552 728 A1**
(43) Veröffentlichungstag der Anmeldung: **16.10.2019**
(21) Anmeldenummer: 19167329.2
(22) Anmeldetag: 04.04.2019
(51) Int. Cl.: B21F 1/02, B21F 11/00, B21F 23/00, B23D 36/00, B23D 25/00

(54) **RICHT- UND ABSCHNEIDEMASCHINE**

(30) Priorität: 13.04.2018 DE 102018205610
(71) Anmelder: WAFIOS Aktiengesellschaft, 72764 Reutlingen (DE)
(72) Erfinder: WEIGMANN, Uwe-Peter, 72622 Nürtingen (DE); PFEIFFER, Jörg, 72770 Reutlingen (DE); STORZ, Peter, 72108 Rottenburg (DE)
(74) Vertreter: Patentanwälte Ruff, Wilhelm, Beier, Dauster & Partner mbB

(57) **Zusammenfassung**

Eine Richt- und Abschneidemaschine zum Herstellen von gerichteten Elementen mit vorgebbarer Länge aus einem drahtförmigen Material, umfasst eine Vorschubeinrichtung zum Einziehen von Material (105) von einem Materialvorrat, einer Richteinrichtung zum Richten des von der Vorschubeinrichtung in einen Arbeitsbereich der Richteinrichtung geförderten Materials, eine der Richteinrichtung nachgeschalteten Schnitteinrichtung (130) zum Abtrennen eines Abschnitts vorgebbarer Länge von dem gerichteten Material zur Erzeugung des gerichteten Elements, ein Messsystem zur Ermittlung der Länge des Materials und zum Erzeugen von die Länge repräsentierenden Signalen sowie einer Steuereinrichtung (150) zur Ansteuerung der Schnitteinrichtung (130) auf Basis von Signalen des Messsystems. Das Messsystem weist an einer ersten Sensorposition (P1) hinter der Schnitteinrichtung (130) einen ersten Sensor (S1) und an einer zweiten Sensorposition (P2) mit einem Abstand (Δs) hinter der ersten Sensorposition (P1) einen zweiten Sensor (S2) aufweist, wobei die Sensoren (S1, S2) konfiguriert sind, bei Eintreffen eines stirnseitigen Endes (E) eines gerichteten Elementes in der jeweiligen Sensorposition ein Sensorsignal zu erzeugen. Die Steuereinrichtung (150) ist dazu konfiguriert, die Sensorsignale zu verarbeiten und basierend auf einem Zeitintervall zwischen den Sensorsignalen des ersten und des zweiten Sensors einen Zielzeitpunkt zu berechnen, an dem das stirnseitige Ende (E) des Elements eine Zielposition (ZP) erreicht, die einer vorgegebenen Länge des Elements entspricht und die Schnitteinrichtung (130) so anzusteuern, dass zum Zielzeitpunkt oder zeitlich nahe beim Zielzeitpunkt ein Schnitt durchgeführt wird, mit welchem ein Abschnitt vorgegebenen Länge (L) von dem gerichteten Material abgetrennt wird.

## Beschreibung

### ANWENDUNGSGEBIET UND STAND DER TECHNIK

Die Erfindung bezieht sich auf eine Richt- und Abschneidemaschine zum Herstellen von gerichteten Elementen mit vorgebbarer Länge aus einem drahtförmigen Material.

Richt- und Abschneidemaschinen, die gelegentlich auch als Richt- und Ablängmaschinen oder schlicht als Richtmaschinen bezeichnet werden, sind dafür konzipiert, Drähte und andere durch Richten bearbeitbare Materialien mit unterschiedlichen Querschnittsgrößen und -formen zu richten und auf eine gewünschte Länge abzuschneiden. Auf diese Weise können beispielsweise gerippte Drähte aus Betonstahl zu gerichteten Stäben verarbeitet werden, die nachfolgend zu Betonstahlmatten für die Armierung von Betonkonstruktionen netzartig zusammengeschweißt werden. Auch ungerippte, glatte Drähte können verarbeitet werden, um z.B. gerichtete Drahtstäbe zum Aufbau von Käfigen, Einkaufswagen, Zäunen, Körben o.dgl. zu erhalten.

Eine bekannte Richtmaschine hat eine Vorschubeinrichtung zum Einziehen des zu richtenden Materials von einem Materialvorrat, eine Richteinrichtung zum Richten des von der Einzugseinrichtung in einen Arbeitsbereich der Richteinrichtung geförderten Materials und eine der Richteinrichtung nachgeschaltete Schnitteinrichtung zum Abtrennen eines Abschnitts vorgebbarer Länge von dem gerichteten Material zur Erzeugung des gerichteten Elements. Das Material liegt üblicherweise auf einer Drahtspule (coil) vor, wird mittels Schubwalzen der Vorschubeinrichtung vom Drahtvorrat abgespult und in die Richteinrichtung geführt, wo der noch mit Spannungen und Biegungen versehene Draht geradgerichtet wird. Im Anschluss daran wird das nun gerichtete Material von Zugwalzen der Vorschubeinrichtung aus der Richteinrichtung gezogen und in Richtung eines sogenannten Anbaus gefördert. Ist bei dem gerichteten Materialabschnitt die gewünschte Länge erreicht, so wird der Abschnitt mit Hilfe der Schnitteinrichtung abgeschnitten und fällt in eine Sammelmulde. Auf diese Weise können bei Bedarf gerichtete Elemente mit großer Länge von mehreren Metern oder mehreren 10 Metern und geringen Längentoleranzen hergestellt werden.

Der Schnitt, mit dem das gerichtete Element vom Material abgetrennt wird, muss zum richtigen Zeitpunkt bzw. an der richtigen Stelle des geförderten Materials erfolgen, um die gewünschte Länge mit der gewünschten Genauigkeit zu erhalten. Hierzu haben gattungsgemäße Richt- und Abschneidemaschinen ein Messsystem zum Ermitteln der Länge des bewegten Materials und zum Erzeugen von die Länge repräsentierenden Signalen, welche dann von einer Steuereinrichtung zur Ansteuerung der Schnitteinrichtung verarbeitet wird. Zur Längenmessung werden heutzutage unterschiedliche Messmethoden eingesetzt.

Eine bekannte Methode arbeitet mit Hilfe eines Messrades, dessen Umfang so auf das durchlaufende Material gedrückt wird, dass das Messrad vom Material angetrieben wird und mit diesem mitläuft. Die Welle des Messrades überträgt die Drehbewegung auf einen Drehgeber, dessen Gebersignale für eine indirekte Längenmessung verarbeitet werden. Um einen Schlupf zwischen Messrad und dem bewegten Material zu unterbinden, wird ein Laufrad von der Gegenseite gegen das Material gepresst, wodurch das Material zwischen dem Messrad und dem Laufrad eingespannt wird. Die Ausgestaltung des Messrades kann je nach zu richtendem Material variieren. Beim Richten von geripptem Baustahl wird beispielsweise normalerweise ein am Umfang gezahntes Messrad eingesetzt, um eine bestmögliche Mitnahme zu erreichen. Bei glatten Materialoberflächen werden gelegentlich Messräder mit glatter Umfangsfläche eingesetzt, insbesondere dann, wenn die Oberfläche des durchlaufenden Materials nicht beschädigt werden darf. Bei manchen Ausgestaltungen wird zur Vergrößerung der Anpressfläche eine umlaufende Rille in den Umfang des Messrades eingebracht, wodurch der Schlupf zwischen Messrad und Material verringert werden kann.

Die Längenmessung mit Hilfe eines Messrades ist eine konstruktiv einfache und robuste Messmethode. Bei der Verwendung von Messrädern ist allerdings zu beachten, dass nach einer gewissen Nutzungsdauer durch Abnutzung am Messradumfang die Messgenauigkeit allmählich geringer werden kann. Eine häufigere Kalibrierung oder eine Auswechslung von Messrädern ist daher zu empfehlen. Weitere Ungenauigkeiten bzw. Messfehler können durch unzureichende Reibung zwischen Material und Messrad entstehen, also durch Schlupf. Eine Verminderung dieses Problems durch Erhöhung des Anpressdrucks ist zwar möglich, wirkt sich aber in der Regel nachteilig auf den Verschleiß aus, welcher wiederum bei längerer Nutzung zu Messungenauigkeiten führen kann. Außerdem benötigt ein Messrad Bauraum im Bereich vor der Schnitteinrichtung.

Die Patentanmeldung DE 10 2010 014 384 A1 der Anmelderin beschreibt eine Richt- und Abschneidemaschine mit einem berührungslos arbeitenden Messsystem, das bei einer Ausführungsform ein Lasermesssystem umfasst, welches nach dem Laser-Dopplerprinzip arbeitet.

Eine andere Möglichkeit der Längenmessung besteht in der Verwendung eines manuell verstellbaren Auslösekopfs im Anbau. Bei diesem Verfahren erfolgt die Schnittauslösung über den Auslösekopf, der je nach gewünschter Länge des gerichteten Elementes auf einer Tragschiene des Anbaus an geeigneter Position fixiert wird. Hierzu wird in der Regel eine an einem Führungselement des Anbaus befestigte Skala verwendet. Wenn die freie vordere Endfläche des gerichteten Materials beim Vorschub auf einen Auslösehebel trifft, schwenkt dieser aus der Bewegungsbahn des Materials heraus und löst über ein Signal den Schnitt aus. Der Auslösekopf kann auch noch einen Anschlag enthalten, der in einem geringen Abstand hinter der Kontaktfläche des Auslösehebels angebracht ist. Während der Schnittauslösung trifft in diesen Fällen das Element auf den Anschlag, um eine möglichst exakte Länge zu erreichen. Da bei Längenmessung mit manuell verstellbarem Auslösekopf die Längenmessung erst sehr kurz vor dem Schnitt erfolgt, ist der Weg, auf dem noch Messfehler auftreten können, sehr gering, so dass sehr hohe Messgenauigkeiten erzielbar sind. Die Längentoleranzen bei Verwendung eines Anschlages können im Bereich weniger Zehntel Millimeter liegen, ohne Anschlag werden in der Regel Toleranzen in der Größenordnung von ein bis zwei Millimeter erreicht. Das Messverfahren mit Auslösekopf ist zwar genau, jedoch ist das Einrichten bei der Einstellung einer neuen Soll-Länge relativ aufwendig und erfordert Erfahrung beim Bediener.

### AUFGABE UND LÖSUNG

Der Erfindung liegt die Aufgabe zugrunde, eine Richt- und Abschneidemaschine bereitzustellen, mit welcher gerichtete Stäbe aus Draht mit engen Längentoleranzen hergestellt werden können.

Zur Lösung dieser Aufgabe stellt die Erfindung eine Richt- und Abschneidemaschine mit den Merkmalen von Anspruch 1 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Die Richt- und Abschneidemaschine ist zum Herstellen von gerichteten Elementen mit vorgebbarer Länge aus einem drahtförmigen Material geeignet. Sie weist hierzu eine Vorschubeinrichtung zum Einziehen von Material von einem Materialvorrat, eine Richteinrichtung zum Richten des von der Vorschubeinrichtung in einem Arbeitsbereich der Richteinrichtung geförderten Materials sowie eine der Richteinrichtung nachgeschaltete Schnitteinrichtung zum Abtrennen eines Abschnitts vorgebbarer Länge von dem gerichteten Material zur Erzeugung des gerichteten Elements auf. Weiterhin ist ein Messsystem zur Ermittlung der Länge des Materials und zum Erzeugen von Signalen vorgesehen, die die Länge repräsentieren. Eine Steuereinrichtung der Richt- und Abschneidemaschine ist dazu konfiguriert, die Schnitteinrichtung auf Basis von Signalen des Messsystems anzusteuern. Die Schnittauslösung kann somit auf Basis von Signalen eines Messsystems erfolgen, wodurch eine Optimierung der Längentoleranzen der abgetrennten Abschnitte gerichteten Materials möglich ist.

Das Messsystem weist mehrere Sensoren auf, die in Materialflussrichtung hinter der Schnitteinrichtung angeordnet sind. Ein erster Sensor ist an einer ersten Sensorposition hinter der Schnitteinrichtung angeordnet. An einer zweiten Sensorposition mit Abstand hinter der ersten Sensorposition ist ein zweiter Sensor angeordnet. Die Sensoren sind jeweils dazu konfiguriert, bei Eintreffen eines stirnseitigen Endes eines gerichteten Elements in der jeweiligen Sensorposition ein Sensorsignal zu erzeugen. Die Sensoren reagieren also bei Eintreffen des vorderen Endes des vorgeschobenen Materials an den jeweiligen Sensorpositionen. Die Steuereinrichtung ist dazu konfiguriert, die Sensorsignale zu verarbeiten. Dazu ist eine signalübertragende Verbindung zwischen den Sensoren und entsprechenden Eingängen der Steuereinrichtung vorgesehen. Die Steuereinrichtung ist so konfiguriert, dass sie basierend auf einem Zeitintervall zwischen dem Auftreten der Sensorsignale des ersten Sensors und des zweiten Sensors einen Zielzeitpunkt berechnet, an welchem das stirnseitige Ende des in Transportrichtung vorgeschobenen Elements eine Zielposition erreicht, die einer vorgegebenen Länge des Elements entspricht. Die Steuereinrichtung ist weiterhin derart konfiguriert, dass sie die Schnitteinrichtung so ansteuert, dass zum Zielzeitpunkt oder zeitlich nahe beim Zielzeitpunkt mit der Schnitteinrichtung ein Schnitt durchgeführt wird, mit welchem ein Abschnitt vorgegebener Länge von dem gerichteten Material abgetrennt wird.

Die Schnittauslösung erfolgt somit jeweils auf Basis einer Berechnung, in die ein Zeitintervall eingeht, welches zwischen dem Auftreten der Sensorsignale des ersten Sensors und des Sensorsignals des zweiten Sensors verstreicht. Gemäß dieser beanspruchten Erfindung erfolgen somit die Schnittauslösung und die Durchführung des Schnitts auf Basis einer Berechnung mit Zeitinformationen von (mindestens) zwei Sensoren, die in Bewegungsrichtung des gerichteten Materials mit Abstand hintereinanderliegen.

Die zeitliche Lage des Schnittes kann damit durch die Steuereinheit mit großer Genauigkeit vorgegeben werden, z.B. mit einer zeitlichen Genauigkeit im Millisekunden-Bereich. Der Zielzeitpunkt und der tatsächliche Schnitt können praktisch mehr oder weniger zusammenfallen, z.B. bis auf eine oder zwei oder drei Millisekunden genau. Vorzugsweise liegen zwischen dem Zielzeitpunkt und dem tatsächlichen Schnitt maximal zehn Millisekunden. Wenn der Zielzeitpunkt und der Schnittzeitpunkt auseinanderfallen, so sollte vorzugsweise der Schnitt zeitlich dem Zielzeitpunkt nachfolgen, so dass das abgelängte Materialstück in jedem Fall nicht zu kurz wird.

Bei manchen Ausführungsformen basiert die Berechnung zusätzlich auf Positionsinformationen zu mindestens einer der Sensorpositionen. Für die Berechnung kann z.B. ein bekannter Wert für den Abstand zwischen den hintereinander liegenden Sensorpositionen (erste Sensorposition und zweite Sensorposition) vorliegen. Dieser Abstand entspricht dem Weg, den das stirnseitige Ende des vorgeschobenen gerichteten Elements innerhalb des Zeitintervalls zurücklegt. Damit kann aufgrund der Zeitmessung und des bekannten Abstands zwischen den Sensoren die tatsächliche (mittlere) Vorschubgeschwindigkeit des vorgeschobenen gerichteten Materials im Bereich zwischen den Sensoren oder eine dazu proportionale Größe berechnet werden. Da weiterhin die Sensorpositionen entlang der Vorschubstrecke des Materials bekannt sind, kann für jeden Zeitpunkt nach Empfangen des zweiten Sensorsignals genau berechnet werden, an welcher axialen Position sich das stirnseitige Ende des vorgeschobenen Elements befindet. Somit kann basierend auf den vorliegenden Informationen auch ein Zielzeitpunkt berechnet werden, an welchem das stirnseitige Ende des Elements die Zielposition erreicht. Als Zielposition kann diejenige Position gewählt werden, deren Abstand zur Schnittebene der Schnitteinrichtung der gewünschten Länge des abzuschneidenden Materialabschnitts entspricht.

Bei diesen Ausführungsformen erfolgt somit die Schnittauslösung auf Basis einer Berechnung mit Zeitinformationen und Positionsinformationen von (mindestens) zwei Sensoren, die in Bewegungsrichtung des gerichteten Materials mit Abstand hintereinanderliegen.

Ein Messsystem zum Messen der durchlaufenden Länge von Material im Bereich vor der Schnitteinrichtung kann bei Nutzung der beanspruchten Erfindung entfallen. Vorzugsweise ist im Bereich zwischen der Richteinrichtung und der Schnitteinrichtung keine Komponente eines Längenmesssystems angeordnet, insbesondere kein Messrad. Die sensorbasierte Messung im Bereich hinter der Schnitteinrichtung, insbesondere also im Anbau der Maschine, ermöglicht somit eine bessere Nutzung des Bauraums vor der Schnitteinrichtung, so dass dort kompaktere Aufbauten möglich sind. Beispielsweise kann ein Abstand zwischen den der Richteinheit nachgeschalteten Zugrollen und der diesen nachgeschalteten Schnitteinrichtung kürzer sein als bei herkömmlichen Richt- und Abschneidemaschinen, die in diesem Bereich ein Messrad oder eine andere Komponente eines Längenmesssystems aufweisen.

Die Sensoren können nach unterschiedlichen Sensorprinzipien arbeiten. Beispielsweise kann der erste Sensor und/oder der zweite Sensor ein taktiler Sensor sein, welcher ein Sensorsignal erzeugt, wenn das stirnseitige Ende des vorgeschobenen Materials auf einen entsprechenden Taster oder dergl. auftrifft.

Alternativ können berührungslos arbeitende Sensoren verwendet werden, beispielsweise kapazitive Sensoren, induktive Sensoren oder optische Sensoren. Die Sensoren (erster Sensor und zweiter Sensor) können nach dem gleichen Sensorprinzip oder unterschiedlichen Sensorprinzipien arbeiten.

Bei manchen Ausführungsformen ist zumindest der erste Sensor, also derjenige Sensor, der näher an der Schnitteinrichtung sitzt und den das stirnseitige Ende des vorgeschobenen Materials zuerst erreicht, ein optischer Sensor, z.B. ein optischer Sensor, der nach Art einer Lichtschranke funktioniert. Bei manchen Ausführungsformen sind der erste Sensor und der zweite Sensor jeweils optische Sensoren, z.B. nach Art einer Lichtschranke. Optische Sensoren, z.B. solche, die nach Art einer Lichtschranke oder unter Erfassung von Lichtreflexen arbeiten, können sich durch extrem schnelle Reaktionszeiten auszeichnen, wenn das stirnseitige Ende des vorgeschobenen Materials eintrifft, so dass auch bei hohen Vorschubgeschwindigkeiten zeitgenaue Messungen und dementsprechend genaue Vorausberechnungen von Zielzeitpunkt und Zielort möglich sind. Hierdurch können eventuelle Längenfehler besonders gering gehalten werden.

Ein großer Vorteil der sensorbasierten Messung mithilfe von zwei oder mehr mit Abstand hintereinander geschalteten Sensoren besteht darin, dass auf einen mechanischen Anschlag zur Vorgabe der Länge des gerichteten Materialstücks verzichtet werden kann. Bei manchen Ausführungsformen ist dementsprechend kein mechanischer Anschlag zur Vorgabe der Länge des Drahts vor der Auslösung des Schnitts vorgesehen. Damit können auch Probleme vermieden werden, die sich bei anschlagsbasierten Lösungen ergeben. Ist ein Anschlag vorhanden, so sollte das vorgeschobene Material möglichst genau dann geschnitten werden, wenn die Stirnseite des Elements den Anschlag erreicht. Erfolgt stattdessen die Schnittauslösung später, können sich mehr oder weniger lange Stillstandszeiten des Materials am Anschlag ergeben, wodurch es zu Oberflächenbeschädigungen, hohem Verschleiß und zur Gefahr von Drahtbruch in der Richteinheit kommen kann. Erfolgt dagegen die Schnittauslösung zu früh, so dass das stirnseitige Ende den Anschlag noch nicht erreicht hat, werden die abgeschnittenen Elemente zu kurz sein.

Es gibt jedoch auch Ausführungsformen, bei denen ein mechanischer Anschlag vorhanden ist. Bei manchen Ausführungsformen ist der zweite Sensor ein taktiler Anschlagsensor, der ein Sensorsignal abgibt, wenn das stirnseitige Ende des vorgeschobenen Elements die dortige Anschlagsposition erreicht. Der Anschlag kann so positioniert werden, dass die Anschlagsposition der Zielposition entspricht. Dadurch kann die Länge des Materialabschnitts mit hoher Präzision vorgegeben werden. Mithilfe des vorgeschalteten ersten Sensors und des als Anschlag ausgebildeten zweiten Sensors kann dann basierend auf den Sensorsignalen bei der Herstellung eines ersten Elements über die Übermittlung des Zeitintervalls eine Schnittauslösezeit berechnet werden. Der Begriff "Schnittauslösezeit" bezeichnet in dieser Anmeldung den Zeitraum zwischen dem Auftreten des ersten Sensorsignals und dem Auftreffen des Schnittwerkzeugs auf das Werkstück beim Schnittvorgang. Unter Verwendung der berechneten Schnittauslösezeit kann dann bei der Verarbeitung des nachfolgenden nächsten Elements basierend auf dem Zeitpunkt des Auftretens des ersten Sensorsignals berechnet werden, wann das stirnseitige Ende des durchlaufenden Materials die zweite Sensorposition, nämlich die Anschlagsposition, erreicht. Die Schnittauslösung und Schnittdurchführung kann dann basierend auf dieser Zeitberechnung so optimiert werden, dass der Schnitt möglichst exakt zu dem Zeitpunkt erfolgt, an welchem das stirnseitige Ende am Anschlag anschlägt. Vorzugsweise wird der Prozess automatisch so optimiert, dass der Schnitt sehr kurz (z.B. nur eine oder wenige Millisekunden) nach Auftreffen des stirnseitigen Endes am Anschlag erfolgt. Damit können zu lange Stillstandzeiten zwischen Anschlagen am Anschlag und Schnitt genauso vermieden werden wie eine vorzeitige Schnittauslösung, bevor das stirnseitige Ende den Anschlag erreicht.

Die Steuereinrichtung kann somit derart konfiguriert sein, dass eine Stillstandzeit des Elements zwischen einem Auftreffen des stirnseitigen Endes des Elements auf dem taktilen Anschlagsensor und dem Abtrennen des Abschnitts vorgegebener Länge im Vergleich zu einem vorher hergestellten Abschnitt vorgegebenen Länge automatisch reduziert wird.

Der Abstand zwischen dem ersten und dem zweiten Sensor gemessen in Vorschubrichtung des Materials kann im Hinblick auf die typischen Vorschubgeschwindigkeiten bei der Richt- und Abschneidemaschine und den typischen Größenordnungen der abzutrennenden Längen optimiert sein. Typische Vorschubgeschwindigkeiten können z.B. im Bereich von wenigen m/s liegen, z.B. im Bereich von 0.5 m/s bis 2.5 m/s. Bei manchen Ausführungsformen beträgt der Abstand mindestens 40 mm, insbesondere mindestens 150 mm oder mindestens 200 mm. Durch relativ große Abstände können bei Bedarf relativ genaue Messwerte für die (mittlere) Vorschubgeschwindigkeit des Materials im Bereich zwischen den Sensoren ermittelt werden. Größere oder kleinere Abstände sind jedoch nicht ausgeschlossen.

Bei manchen Ausführungsformen hat das Messsystem genau zwei Sensoren, nämlich einen ersten Sensor und genau einen nachgeschalteten zweiten Sensor. Es können jedoch auch mehr als zwei in einem Abstand zueinander liegende Sensoren vorgesehen sein, beispielsweise drei Sensoren oder vier Sensoren oder fünf Sensoren, zwischen denen jeweils bekannte Abstände liegen können.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
- Fig. 1: zeigt eine Übersichtsdarstellung einer Richt- und Abschneidemaschine gemäß einer ersten Ausführungsform der Erfindung;
- Fig. 2: zeigt eine vergrößerte Detailansicht der Richt- und Abschneidemaschine aus Fig. 1 im Bereich des Anbaus mit zwei hintereinander geschalteten Sensoren;
- Fig. 3: zeigt eine Detailansicht des Anbaus bei einer der Richt- und Abschneidemaschine gemäß einer zweiten Ausführungsform der Erfindung;
- Fig. 4: zeigt eine Detailansicht des Anbaus bei einer der Richt- und Abschneidemaschine gemäß einer dritten Ausführungsform der Erfindung;
- Fig. 5: zeigt eine Illustration zur Erläuterung einer Ausführungsform mit Optimierung der zeitlichen Lage des Schnitts bei Verwendung eines Anschlags.

### DETAILLIERTE BESCHREIBUNG DER AUSFÜHRUNGSBEISPIELE

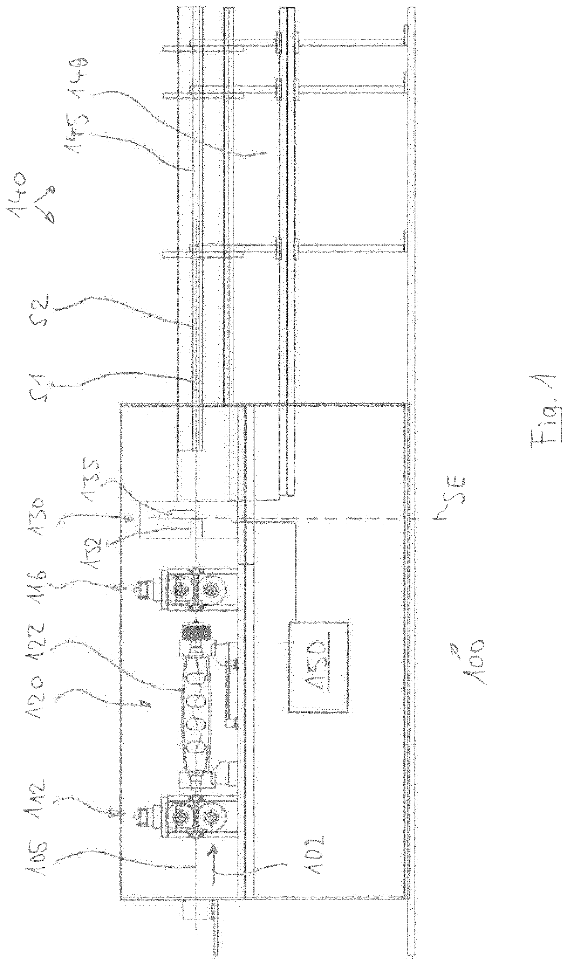

Fig. 1 zeigt eine Übersichtsdarstellung einer Ausführungsform einer Richt- und Abschneidemaschine 100 zum Herstellen von gerichteten Elementen mit vorgebbarer Länge aus einem drahtförmigen metallischen Material 105. Die im Folgenden auch schlicht als "Richtmaschine" 100 bezeichnete Werkzeugmaschine ist zum Herstellen von gerichteten Stäben aus glattem Stahldraht ausgelegt. Solche gerichteten Drahtstäbe können z.B. zur Herstellung von Käfigen, Einkaufswagen, Zäunen, Drahtkörben oder dergleichen verwendet werden. Es gibt auch Varianten zur Verarbeitung von gerippten Stahldrähten, die z.B. zum Aufbau von Betonstahlmatten genutzt werden können.

Sind die hergestellten, gerade gerichteten Stahlstäbe zu kurz, so kann dies bei der Herstellung von netzartigen Strukturen zu unverbundenen Stellen zwischen Längs- und Querstäben und damit zur Schwächung der Konstruktion führen. Sind die Stäbe zu lang, können sich z.B. Probleme bei der Handhabung der Stäbe ergeben. Daher sind für die gerichteten Stäbe in der Regel enge Längentoleranzen einzuhalten. Die Richtmaschine ist in der Lage, bei hohem Materialdurchsatz große Stückzahlen solcher gerichteten Elemente mit sehr kleinem Längenfehler im Bereich von Promille oder darunter herzustellen.

Das drahtförmige Material liegt zunächst auf einer großen Drahtspule (coil) vor und wird mit Hilfe einer Vorschubeinrichtung vom Materialvorrat abgezogen und in die Richtmaschine hineingefördert. Die Vorschubeinrichtung hat an der Eingangsseite der Richtmaschine 100 ein Paar von Schubwalzen 112, die den Draht vom Materialvorrat abziehen und in Richtung der in Durchlaufrichtung 102 nachgeschalteten Richteinrichtung 120 fördern. Die in dieser Anmeldung verwendeten relativen Positionsangaben "vor" und "hinter" an der Durchlaufstrecke des Materials beziehen sich auf diese Durchlaufrichtung oder Vorschubrichtung.

Die Richteinrichtung dient zum Geraderichten des von den Schubwalzen in den Arbeitsbereich der Richteinrichtung geförderten Materials und hat zu diesem Zweck einen rotierend antreibbaren Richtflügel 122 mit mehreren mit axialem Abstand hintereinander angeordneten und radial gegeneinander versetzten Durchführungsöffnungen für das Material. Solche rotierenden Richtsysteme sind an sich bekannt und werden daher hier nicht näher erläutert.

Unmittelbar hinter der Richteinrichtung 120 ist ein Paar von Zugwalzen 116 angeordnet, die zur Vorschubeinrichtung der Richtmaschine gehören und das gerichtete Material aus der Richteinrichtung herausziehen.

Mit geringem Abstand hinter den Zugwalzen 116 ist eine der Richteinrichtung nachgeschaltete Schnitteinrichtung 130 angebracht, die zum Abtrennen von Abschnitten vorgebbarer Länge von dem gerichteten Material vorgesehen ist, um dadurch die gerichteten Elemente vorgebbarer Länge zu erzeugen. Die Schnitteinrichtung 130 ist für einen Geradschnitt in einer Schnittebene SE ausgelegt und weist dazu hinter einer Drahtführung 132 ein vertikal bewegliches Schneidmesser 135 auf, mit dem der Draht zu einem vorgebbaren Zeitpunkt in der Schnittebene SE durchtrennt wird. Der Drahtvorschub wird für den Schnitt kurzzeitig angehalten.

Der Zwischenraum zwischen den Zugwalzen 116 und der Schnitteinrichtung 130 ist frei von mechanischen Komponenten, wie z.B. Messrädern o.dgl. und kann daher sehr kurz sein.

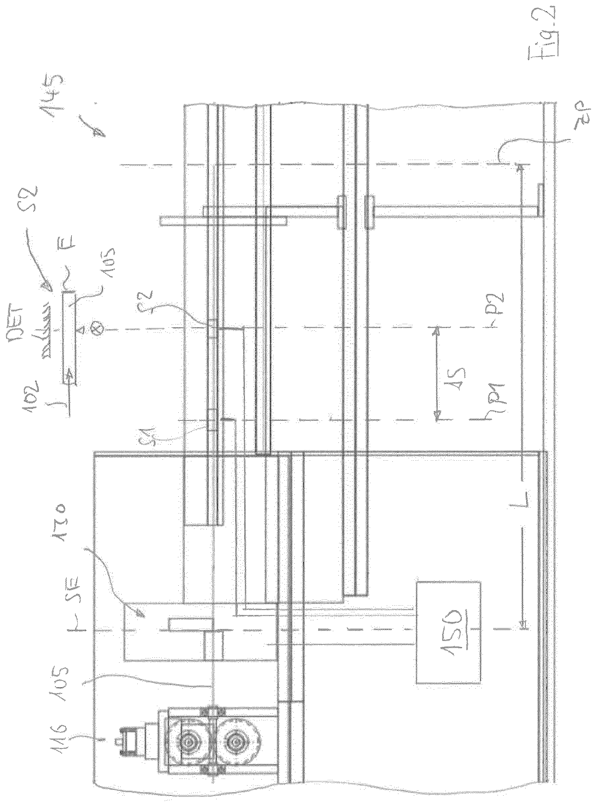

An der Auslaufseite der Richtmaschine befindet der sogenannte Anbau 140 mit einer horizontalen Führungsrinne 145, in die die gerichteten Elemente hineingeschoben werden. Ist die eingestellte Länge erreicht, so wird der Draht abgeschnitten und fällt in eine Sammelmulde 148. Dieser Grundaufbau kann für unterschiedliche Längen genutzt werden. Der Bereich des Anbaus ist in Fig. 2 vergrößert dargestellt.

Um die gewünschte Länge der gerichteten Elemente mit hoher Genauigkeit zu erreichen, ist ein Messsystem zur Ermittlung der Länge des Materials und zum Erzeugen von die Länge repräsentierenden Signale vorgesehen. Die Signale werden von einer computerbasierten Steuereinrichtung 150 der Richtmaschine zum Ansteuern der Schnitteinrichtung 130 verarbeitet, um einen positionsrichtigen Schnitt zu erzeugen.

Das Messsystem umfasst zwei Sensoren S1, S2, die im Bereich des Anbaus 140, also in Durchlaufrichtung 102 des Materials hinter der Schnitteinrichtung 130 und mit Abstand zueinander im Bereich der Führungsschiene 145 angeordnet sind. Der erste Sensor S1 ist an einer ersten Sensorposition P1 mit Abstand hinter der Schnitteinrichtung 130 angeordnet. Der zweite Sensor S2 ist mit größerem Abstand zur Schnitteinrichtung 130 hinter dem ersten Sensor P2 an einer zweiten Sensorposition P2 angeordnet. Es liegt ein fester bekannter Abstand Δs zwischen den Sensoren bzw. den Sensorpositionen vor. Beide Sensoren sind so ausgelegt, dass sie bei Eintreffen eines stirnseitigen Endes E eines in Durchlaufrichtung vorgeschobenen Elements 105 in der jeweiligen Sensorposition P1, P2 ein Sensorsignal erzeugen.

Beide Sensoren S1 und S2 sind im Beispielsfall als optische Sensoren nach Art einer Lichtschranke aufgebaut. Das Detail in Fig. 2 zeigt schematisch den zweiten Sensor S2. Auf einer Seite der Durchlaufstrecke ist dazu eine Lichtquelle LQ angebracht, an der gegenüberliegenden Seite einen lichtempfindlichen Detektor DET, beispielsweise in Form einer Fotodiode. Solange kein Material zwischen Lichtquelle LQ und Detektor DET hindurchläuft, liegt an der Fotodiode eine entsprechende Spannung an. Ab dem Eintreffen des stirnseitigen Endes E blockiert das durchlaufende Material den Lichtpfad zwischen Lichtquelle und Detektor und löst dadurch ein elektrisches Sensorsignal aus. Dieses wird an die angeschlossene Steuereinrichtung 150 übertragen. Der von der Lichtquelle ausgehende Lichtstrahl hat im Beispielsfall einen Durchmesser in der Größenordnung eines Zehntel Millimeters, so dass das Eintreffen des stirnseitigen Endes mit hoher zeitlicher und örtlicher Genauigkeit erfasst werden kann. Der Abstand Δs zwischen den (effektiven) Sensorpositionen liegt im Beispielsfall zwischen ca. 100 mm und ca. 500 mm, kann aber auch darüber oder darunter liegen. Der Abstand zwischen der Schnittebene SE der Schnitteinrichtung 130 und dem ersten Sensor S1 ist größer als der Abstand Δs zwischen den Sensoren.

Im Betrieb der Vorrichtung trifft das stirnseitige Ende des vorgeschobenen Materials zu einem ersten Zeitpunkt t₁ in der ersten Sensorposition P1 und zeitlich versetzt dazu, zu einem späteren Zeitpunkt t₂ > t₁, in der mit Abstand dahinter liegenden zweiten Sensorposition P2 ein. Die Sensoren liefern zu den jeweiligen Zeitpunkten t₁ bzw. t₂ jeweils ein Sensorsignal (erstes Signal bzw. zweites Sensorsignal). Die Steuereinrichtung 150 ist dazu eingerichtet, die Sensorsignale analog und/oder digital zu verarbeiten. Die Steuereinrichtung 150 berechnet aus dem Zeitintervall Δt = t₂ - t₁ und dem Abstand Δs zwischen den (effektiven) Sensorpositionen einen Wert v = Δs/Δt, der der mittleren Vorschubgeschwindigkeit des Materials im Bereich zwischen den Sensoren entspricht.

Basierend auf diesem Wert sowie der bekannten ersten Sensorposition P1 und/oder der bekannten zweiten Sensorposition P2 kann für jeden nachfolgenden Zeitpunkt unter der Annahme konstanter Vorschubgeschwindigkeit die Position des vorderen stirnseitigen Endes E des vorgeschobenen Drahts in Abhängigkeit von der Zeit berechnet werden.

Soll nun der Draht auf eine vorgegebene Länge zugeschnitten werden, die dem Längsabstand zwischen der Schnittebene SE der Schnitteinrichtung und einer Zielposition ZP mit Abstand hinter den Sensoren entspricht, so berechnet die Steuereinrichtung, zu welchem Zeitpunkt das stirnseitige Ende E diese Zielposition ZP erreicht. Dieser Zeitpunkt wird hier als Zielzeitpunkt bezeichnet. Die Steuereinrichtung steuert die Schnitteinrichtung 130 so an, dass zum Zielzeitpunkt ein Schnitt ausgelöst wird. Mithilfe des geraden Schnitts wird das Drahtstück entsprechend der Länge L dann vom zugeführten Material abgetrennt. Durch Vorausberechnung des richtigen Schnittzeitpunkts können Drahtstücke vorgegebener Länge mit hoher Längengenauigkeit gefertigt werden.

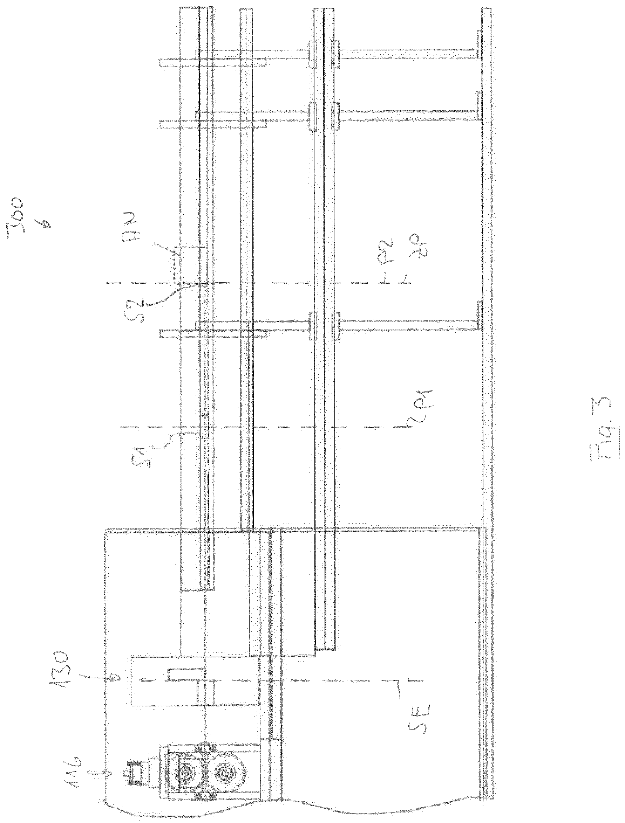

Anhand von Fig. 3 werden nun Aufbau und Funktion der Abschneidevorgänge bei einer zweiten Ausführungsform einer Richt- und Abschneidemaschine 300 erläutert. Der Aufbau der Richt- und Abschneidemaschine im Bereich vor dem Anbau 345 entspricht exakt dem Aufbau des ersten Ausführungsbeispiels, weshalb auf eine nochmalige Beschreibung verzichtet wird. Auch der Anbau 345 ist prinzipiell gleich aufgebaut. Unterschiede bestehen in Aufbau und Funktion des Messsystems, dessen Signale zur Schnittauslösung auf Basis einer Berechnung mit Zeit- und Positionsinformationen von Sensoren genutzt werden.

Das Messsystem weist an der ersten Sensorposition P1 in einem Abstand hinter der Schnitteinrichtung 130 einen berührungslos arbeitenden ersten Sensor S1 in Form eines optischen Sensors auf, der Lichtreflexionen zur Generierung von Sensorsignalen nutzt. In einem Abstand Δs hinter dem ersten Sensor S1 ist an einer zweiten Sensorposition P2 ein zweiter Sensor S2 angebracht, der als taktiler Anschlagssensor in Form eines Anschlags AN mit einem Massekontakt an seiner der Richteinheit zugewandten Seite aufgebaut ist. Am ersten Sensor S1 wird ein Sensorsignal ausgelöst, wenn die Stirnseite des vorgeschobenen Materials die senkrecht zur Durchlaufrichtung liegende Sensorebene bzw. die Sensorposition P1 des ersten Sensors passiert. Am zweiten Sensor S2 wird ein zweites Sensorsignal ausgelöst, wenn die Stirnseite auf den taktilen Anschlagssensor mit Massekontakt auftrifft, also die zweite Sensorposition erreicht.

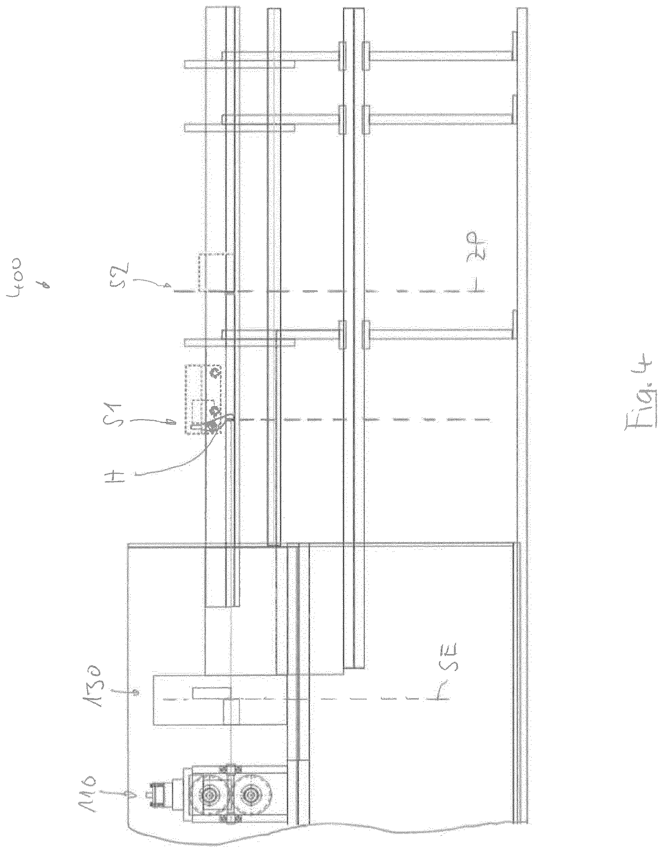

Die Fig. 4 zeigt eine Variante der Ausführungsform aus Fig. 3. Anstelle des dortigen optischen ersten Sensors S1 ist hier ein taktiler erster Sensor S1 vorgesehen, der einen Auslösehebel H hat, gegen den die Stirnseite des Drahts 105 anstößt, wenn beim Vorschub die Sensorposition P1 des ersten Sensors S1 erreicht ist. Die Verschwenkung des Auslösehebels wird induktiv erfasst und löst das erste Sensorsignal aus. Die Variante aus Fig. 4 weist somit zwei hintereinander geschaltete taktile Sensoren auf.

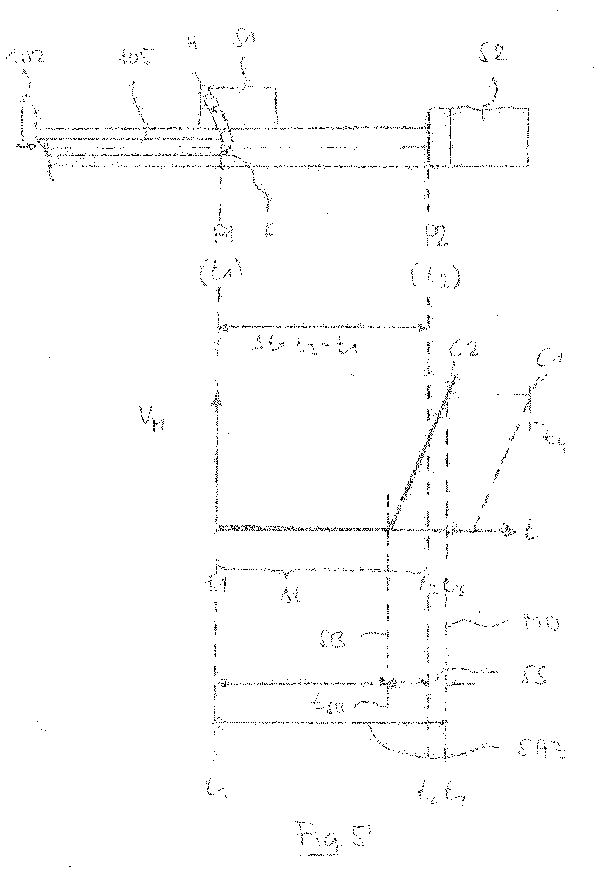

Die Funktionsweise der Anordnung aus Fig. 4 wird anhand von Fig. 5 näher erläutert. Fig. 5 zeigt im oberen Teil den gestrichelt dargestellten Vorschubweg des Drahtes 105 im Bereich des Anbaus und zwar dort, wo der taktile erste Sensor S1 mit Auslösehebel H und der mit Abstand dahinter angeordnete zweite Sensor S2 angeordnet sind. Der zweite Sensor S2 ist als taktiler Anschlagsensor mit einem festen Anschlag und einem integrierten Massekontakt angeordnet sind, der ein Sensorsignal generiert, wenn die Stirnseite des Drahts auf den Anschlag trifft.

Die Stirnseite E des Drahtes 105 trifft zum dargestellten Zeitpunkt gerade an der ersten Sensorposition P1 ein und schlägt dabei am Hebel H des Auslösekopfs an. Bei der vorgegebenen Vorschubgeschwindigkeit trifft die Stirnseite des Drahts 105 dann zu einem späteren Zeitpunkt t₂ > t₁ an der zweiten Sensorposition P2 ein, schlägt am Massekontakt des Anschlags an, wodurch die Vorschubbewegung gestoppt und ein zweites Sensorsignal ausgelöst wird. Zwischen dem Auftreffen auf dem Auslösehebel (t₁) und dem Anschlag am Massekontakt bzw. Anschlag liegt das Zeitintervall Δt = t₂ - t₁.

Das darunter dargestellte x-y-Diagramm repräsentiert die Bewegungen des Schnittwerkzeugs bzw. Schnittmessers der Schnitteinrichtung 130 in Abhängigkeit von der Zeit t. Dazu ist die Geschwindigkeit v_{M} des Schnittmessers (Schnittwerkzeug) als Funktion der Zeit t aufgetragen. Die senkrechte gestrichelte Linie SB markiert den Zeitpunkt der Schnittauslösung, also des Beginns der Schnittbewegung des Schneidmessers, also der Bewegung, mit der sich das Schneidmesser auf den zu schneidenden Draht zubewegt. Der zugehörige Zeitpunkt t_{SB} des Beginns der Schnittbewegung liegt zwischen t₁ und t₂. Die mit "MD" bezeichnete senkrechte gestrichelte Linie markiert den Zeitpunkt t₃, in welchem sich das bereits bewegende Schnittmesser den Draht gerade berührt ("Messer an Draht"). Unmittelbar danach beginnt der Schnittvorgang, bei dem das Messer in den Draht eindringt und den Draht schließlich durchtrennt.

Der Zeitraum zwischen dem Erreichen der ersten Sensorposition P1 (Auftreten des ersten Sensorsignals bei t₁) und der Situation "Messer an Draht" bei t₃ wird hier als Schnittauslösezeit SAZ bezeichnet, also SAZ = t₃ - t₁.

Die Position P2 des Anschlags bestimmt mit hoher Präzision die Länge des abgetrennten Drahtstücks. Damit die Stirnseite E des Drahtes auf jeden Fall am Anschlag (bei P2) anliegt, bevor die Durchtrennung beginnt, ist die Maschine so eingerichtet, dass der Zeitpunkt t₃ in jedem Fall später liegt als der Zeitpunkt des Anschlags, nämlich t₂. Das Zeitintervall t₃ - t₂ repräsentiert somit die Stillstandszeit SS, die vergeht, nachdem das vordere Ende E des Drahtes am Anschlag ansteht bis zum Zeitpunkt, in dem das sich bewegende Schnittmesser den Draht berührt. Wie bereits oben erwähnt, sollte diese Stillstandzeit SS so kurz wie möglich sein, um Beschädigungen am Draht bei am Anschlag anliegendem Draht zu vermeiden oder zu minimieren.

Die Richt- und Abschneidemaschine bzw. ihre Steuerung ist so konfiguriert, dass diese Stillstandzeit SS automatisch auf sehr kurze Zeiträume (in der Größenordnung einer oder weniger Millisekunden) beschränkt werden kann. Gleichzeitig ist durch Nutzung des Anschlags sichergestellt, dass die gewünschte Länge des abgeschnittenen Drahtstücks mit hoher Präzision (meist besser als ein Millimeter, insbesondere besser als 0,5 Millimeter, z.B. einen oder wenige Zehntelmillimeter) eingehalten werden kann.

In Vorbereitung des Prozessablaufs wird die Maschine eingerichtet. Dazu werden unter anderem vom Maschinenbediener die Soll-Drahtlänge und die zu nutzende Einzugsgeschwindigkeit (Vorschubgeschwindigkeit) des Drahts in die Steuerung der Maschine eingeben. Der Prozess wird zunächst so eingerichtet bzw. programmiert, dass die Stirnseite E des Drahts auf jeden Fall den Anschlag bei der Position P2 erreicht hat, bevor der Schnitt ausgelöst wird.

Dann wird die Maschine gestartet, um ein erstes Drahtelement herzustellen. Dieses wird hergestellt, indem der Draht durch die Schnitteinrichtung 130 hindurch vorbei am ersten Sensor S1 bis zum Anschlag an den zweiten Sensor S2 vorgeschoben wird. Bei Durchtritt durch die Sensorebene des ersten Sensors S1 wird ein erstes Sensorsignal erzeugt. Das zweite Sensorsignal wird dann beim Anschlag der Stirnseite des Drahtes am Massekontakt des zweiten Sensors S2 generiert.

Die Schnitteinrichtung ist bei diesem Drahtelement bzw. dem ursprünglich programmierten Ablauf noch so "großzügig" eingestellt, dass die Stirnseite des Drahtes den Anschlag auf jeden Fall sicher erreicht hat, bevor der Schnitt erfolgt. Es wird also zunächst zur Sicherheit ein relativer später Schnitt eingestellt, um das Anliegen am Anschlag sicherzustellen.

Die Bewegungskurve des Schnittmessers beim ersten Drahtelement wird in dem Diagramm von Fig. 5 durch die gestrichelte Kurve C1 repräsentiert. Bei dieser relativ späten Schnittauslösung erreicht das Schnittmesser den Draht erst zum relativ späten Zeitpunkt t₄, so dass sich zwischen dem Anschlagszeitpunkt (bei t₂) und dem Zeitpunkt t₄ eine relativ lange Stillstandszeit t₄ - t₂ ergibt.

Die Steuereinrichtung ist so konfiguriert, dass sie aus der Differenz der Zeitpunkte t₁ und Zeitpunkt t₂ und der bekannten Schnittauslösezeit SAZ einen optimierten Schnittablauf berechnen kann, der sicherstellt, dass die Stirnseite des Drahts auf jeden Fall den Anschlag erreicht hat, die Stillstandszeit t₄ - t₂ des Drahts am Anschlag jedoch kürzer wird als bei der Herstellung des ersten Drahtelements nach manuellem Einrichten der Maschine. Ziel der Optimierung des Beginns der Schnittbewegung ist eine Minimierung der Stillstandszeit am Anschlag. Eine entsprechende Annäherung der Kurve C1 an die Kurve C2 kann dadurch erreicht werden, dass der Beginn der Schnittbewegung (Zeitpunkt t_{SB}) zeitlich vorgezogen wird. Somit wird die Zeitdauer t_{SB} - t₁ verringert. Dies kann durch einen Regelalgorithmus in der Steuereinrichtung automatisch erfolgen.

In dem Diagramm von Fig. 5 sind die Bewegungen des Schnittmessers beim Herstellen des zweiten (nachfolgenden) Drahtelements durch die durchgezogene Linie C2 repräsentiert. Die Steuerung geht dabei davon aus, dass der Drahtvorschub beim zweiten Drahtelement mit der gleichen (mittleren) Vorschubgeschwindigkeit ablaufen wird wie beim ersten Drahtelement, so dass das Zeitintervall Δt zwischen t₁ und t₂ das gleiche sein wird. Damit ist auch die Zeit zwischen dem ersten Sensorsignal und dem Anstoßen am Anschlag bekannt.

Weiterhin beruht die Steuerung auf dem Umstand, dass die dynamischen Eigenschaften der Schnittachse (also der Maschinenachse, die das Schnittwerkzeug bewegt) mit hoher Genauigkeit reproduzierbar sind, so dass die Beschleunigung des Schnittwerkzeuges unabhängig von der zeitlichen Lage des Beginnes dieser Beschleunigung immer im Wesentlichen konstant bleibt. Dies wird durch die Parallelität der Kurven C1 und C2 nach Beginn der Schnittmesserbewegung repräsentiert.

Der Effekt der Steuerung mit Hilfe der berechneten Zeitdifferenz Δt kann also als kontrollierte Vorverlagerung der Beginns der Schnittbewegung (Zeitpunkt t_{SB}) des Schneidwerkzeugs beschrieben werden, so dass derjenige Zeitpunkt t₃, an welchem das sich bewegende Schnittmesser den Draht berührt, kontrolliert in die zeitliche Nähe kurz hinter den Zeitpunkt t₂ gebracht werden kann, in welchem die Drahtstirnseite am Anschlag anschlägt.

Die Steuerung kann so programmiert werden, dass der tatsächliche Schnitt unmittelbar nach dem Auftreffen am Anschlag, beispielsweise in der Größenordnung von einer Millisekunde später, erfolgen kann, so dass die Stillstandzeit SS z.B. auf der Größenordnung von ca. einer Millisekunde reduziert werden kann.

In anderen Worten: mit der gemessenen Zeitdauer Δt = t₂ - t₁ und dem Wissen, wie lange der Schnittprozess vom Auslösen der Schnittbewegung (t_{SB}) des Schnittwerkezugs bis zum Auftreffen am Draht (Zeitpunkt t₃) dauert, kann die zeitliche Lage des tatsächlichen Schnitts sehr nahe an den Zeitpunkt des Auftreffendes der Stirnseite am Anschlag gebracht werden.

Für den Schnitt beim zweiten Drahtelement kann also eine Neuberechnung der zeitlichen Lage des Startzeitpunkts t_{SB} der Messerbewegung vorgenommen werden, um diesen so vorzuverlegen, dass die Stillstandzeit (t₃ - t₂) möglichst kurz wird

Während also bei der Herstellung des ersten Drahtelements nach der ursprünglichen Einrichtung der zeitliche "Sicherheitsabstand" noch relativ groß ist, um auf jeden Fall sicher zu stellen, dass der Draht erst geschnitten wird, wenn er am Anschlag anliegt, wird dieser zeitliche Abstand auf Basis der Zeitmessung automatisch auf ein wesentlich kleineres Maß (zum Beispiel in der Größenordnung einer Millisekunde) reduziert. Dies erfolgt durch Vorausberechnung der zeitlichen Lage des Zeitpunkts t_{SB}, an dem die Bewegung des Schnittmessers in Richtung des zu schneidenden Drahts beginnt. Dieser Startzeitpunkt wird so "nach vorne" verlegt, dass die Differenz t₃ - t₂, also die Stillstandszeit SS kurz wird.

Somit kann auf Basis einer Zeitmessung mit Hilfe der beiden Sensoren und bei der Kenntnis der hohen Reproduzierbarkeit der Bewegungsabläufe des Schnittmessers einerseits sichergestellt werden, dass der Draht auf jeden Fall am Anschlag anliegt, bevor der Schnitt erfolgt, andererseits aber auch die Stillstandszeit im anliegenden Zustand sehr kurz gehalten werden.

Es ist unmittelbar einsichtig, dass eine analoge Vorgehensweise beispielsweise auch bei der Anordnung von Fig. 3 genutzt werden kann, bei der der erste Sensor S1 kein taktiler Sensor (mit Auslösehebel) ist, sondern ein optischer Sensor.

## Patentansprüche

1. Richt- und Abschneidemaschine zum Herstellen von gerichteten Elementen mit vorgebbarer Länge aus einem drahtförmigen Material, mit:
einer Vorschubeinrichtung zum Einziehen von Material (105) von einem Materialvorrat;
einer Richteinrichtung (120) zum Richten des von der Vorschubeinrichtung in einen Arbeitsbereich der Richteinrichtung geförderten Materials;
einer der Richteinrichtung nachgeschalteten Schnitteinrichtung (130) zum Abtrennen eines Abschnitts vorgebbarer Länge von dem gerichteten Material zur Erzeugung des gerichteten Elements;
einem Messsystem zur Ermittlung der Länge des Materials und zum Erzeugen von die Länge repräsentierenden Signalen; sowie
einer Steuereinrichtung zur Ansteuerung der Schnitteinrichtung (130) auf Basis von Signalen des Messsystems,
**dadurch gekennzeichnet, dass**
das Messsystem an einer ersten Sensorposition (P1) hinter der Schnitteinrichtung (130) einen ersten Sensor (S1) und an einer zweiten Sensorposition (P2) mit einem Abstand (Δs) hinter der ersten Sensorposition (P1) einen zweiten Sensor (S2) aufweist, wobei die Sensoren (S1, S2) konfiguriert sind, bei Eintreffen eines stirnseitigen Endes (E) eines gerichteten Elementes in der jeweiligen Sensorposition ein Sensorsignal zu erzeugen; und
die Steuereinrichtung (150) konfiguriert ist,
die Sensorsignale zu verarbeiten und basierend auf einem Zeitintervall (Δt) zwischen den Sensorsignalen des ersten und des zweiten Sensors einen Zielzeitpunkt zu berechnen, an dem das stirnseitige Ende (E) des Elements eine Zielposition (ZP) erreicht, die einer vorgegebenen Länge des Elements entspricht und
die Schnitteinrichtung (130) so anzusteuern, dass zum Zielzeitpunkt oder zeitlich nahe beim Zielzeitpunkt ein Schnitt durchgeführt wird, mit welchem ein Abschnitt vorgegebenen Länge (L) von dem gerichteten Material abgetrennt wird.

2. Richt- und Abschneidemaschine nach Anspruch 1, **dadurch gekennzeichnet, dass** die Berechnung des Zielzeitpunkts zusätzlich auf Positionsinformation zu mindestens einer der Sensorpositionen basiert.

3. Richt- und Abschneidemaschine nach Anspruch 2, **dadurch gekennzeichnet, dass** die Steuereinrichtung derart konfiguriert ist, dass basierend auf dem Abstand (Δs) und dem Zeitintervall (Δt) eine mittlere Vorschubgeschwindigkeit des vorgeschobenen gerichteten Materials im Bereich zwischen den Sensoren (S2, S2) oder eine dazu proportionale Größe berechnet wird und unter Verwendung der mittleren Vorschubgeschwindigkeit oder der dazu proportionalen Größe und einer Positionsinformation der Zielzeitpunkt berechnet wird.

4. Richt- und Abschneidemaschine nach einem der vorhergehenden Ansprüche, **dadurch gekennzeichnet, dass** im Bereich zwischen der Richteinrichtung (120) und der Schnitteinrichtung (130) keine Komponente eines Längenmesssystems angeordnet ist, insbesondere kein Messrad.

5. Richt- und Abschneidemaschine nach einem der vorhergehenden Ansprüche, **dadurch gekennzeichnet, dass** das Messsystem einen ersten Sensor (S1) und genau einen nachgeschalteten zweiten Sensor (S2) aufweist.

6. Richt- und Abschneidemaschine nach einem der vorhergehenden Ansprüche, **dadurch gekennzeichnet, dass** zumindest der erste Sensor (S1) ein optischer Sensor ist, der vorzugsweise nach Art einer Lichtschranke arbeitet oder der Lichtreflexionen nutzt.

7. Richt- und Abschneidemaschine nach einem der vorhergehenden Ansprüche, **dadurch gekennzeichnet, dass** der erste Sensor (S1) und der zweite Sensor (S2) ein optischer Sensor ist, vorzugsweise nach Art einer Lichtschranke.

8. Richt- und Abschneidemaschine nach einem der vorhergehenden Ansprüche, **dadurch gekennzeichnet, dass** kein mechanischer Anschlag zur Vorgabe der Länge des Drahts vor der Auslösung des Schnitts vorgesehen ist.

9. Richt- und Abschneidemaschine nach einem der Ansprüche 1 bis 6, **dadurch gekennzeichnet, dass** der zweite Sensor (S2) ein taktiler Anschlagssensor ist.

10. Richt- und Abschneidemaschine nach Anspruch 9, **dadurch gekennzeichnet, dass** die Steuereinrichtung derart konfiguriert ist, dass eine Stillstandzeit (SS) des Elements zwischen einem Auftreffen des stirnseitigen Endes (E) des Elements auf dem taktilen Anschlagsensor (S2) und dem Abtrennen des Abschnitts vorgegebener Länge im Vergleich zu einem vorher hergestellten Abschnitt vorgegebener Länge automatisch reduziert wird.
